# EUROPÄISCHE PATENTSCHRIFT

(11) **EP 1 389 701 B1**
(45) Veröffentlichungstag und Bekanntmachung des Hinweises auf die Patenterteilung: **17.11.2010**
(21) Anmeldenummer: 03010970.6
(22) Anmeldetag: 16.05.2003
(51) Int. Cl.: F16J 15/08

(54) **Mehrlagige Dichtung und Verfahren zum Verbinden der Lagen einer mehrlagigen Dichtung**
Multi-layered gasket and method for joining the layers of a multi-layered gasket
Joint plat à couches multiples et méthode pour joindre les couches d'un tel joint

(30) Priorität: 16.08.2002 DE 10237555
(43) Veröffentlichungstag der Anmeldung: 18.02.2004
(73) Patentinhaber: ElringKlinger AG, 72581 Dettingen (DE)
(72) Erfinder: Hegmann, Oliver, 65462 Ginsheim (DE)
(74) Vertreter: Hoeger, Stellrecht & Partner Patentanwälte

(56) Entgegenhaltungen:
- DE-A- 19 822 772
- DE-C- 19 823 115

## Beschreibung

Die vorliegende Erfindung betrifft eine mehrlagige Dichtung, welche mindestens eine erste Lage und eine zweite Lage und mindestens eine Verbindungseinrichtung zum Verbinden der Lagen der Dichtung miteinander umfaßt.

Ferner umfaßt die vorliegende Erfindung ein Verfahren zum Verbinden der Lagen einer mehrlagigen Dichtung, die mindestens eine erste Lage und eine zweite Lage umfaßt, miteinander.

Solche mehrlagigen Dichtungen und Verfahren zum Verbinden der Lagen einer mehrlagigen Dichtung miteinander sind aus dem Stand der Technik bekannt.

Insbesondere ist es bekannt, die Lagen einer mehrlagigen Dichtung durch Vernieten oder Durchsetzfügen miteinander zu verbinden.

Bei diesen Verbindungsarten entsteht jedoch bei der Herstellung der Verbindung ein Materialauftrag senkrecht zu den Hauptflächen der Dichtung, so daß die durch Nieten oder Durchsetzfügen hergestellten Verbindungseinrichtungen ußerhalb des gepreßten Bereichs der Dichtung angeordnet werden müssen. Häufig müssen an den Lagen der Dichtung zusätzliche Laschen außerhalb des gepreßten Bereichs der Dichtung vorgesehen werden, um die Verbindungseinrichtungen im Bereich dieser Laschen unterbringen zu können, was zu erhöhtem Materialverbrauch und zu einer Verletzungsgefahr aufgrund der überstehenden Laschen führen kann.

Ferner ist es bekannt, die Lagen einer mehrlagigen Dichtung durch Umfalzungen miteinander zu verbinden. Auch bei dieser Verbindungsart entsteht entweder ein Materialauftrag senkrecht zu den Hauptflächen der Dichtung, und/oder zusätzliche Laschen müssen am Rand der Dichtungslagen vorgesehen werden.

Ferner ist es bekannt, die Lagen einer mehrlagigen Dichtung durch Verschweißen miteinander zu verbinden. Dieses Verbindungsverfahren kann jedoch nicht angewandt werden, wenn die Lagen der Dichtung, beispielsweise mit einem Elastomer, beschichtet sind, weil die Beschichtung durch das Verschweißen zerstört wird. Außerdem ist das Verschweißen nicht möglich oder führt zu unzuverlässigen Ergebnissen, wenn eine oder mehrere der Lagen der Dichtung aus Nichtmetallen gebildet sind.

Die DE 198 23 115 C offenbart eine mehrlagige Dichtung mit den Merkmalen des Oberbegriffs von Anspruch 1.

Der vorliegenden Erfindung liegt daher die Aufgabe zugrunde, eine mehrlagige Dichtung der eingangs genannten Art zu schaffen, bei welcher die Lagen der Dichtung in einfacher und zuverlässiger Weise miteinander verbunden sind.

Diese Aufgabe wird durch eine Dichtung nach Anspruch 1 gelöst.

Der erfindungsgemäßen Erfindung liegt somit das Konzept zugrunde, ein in der ersten Lage, beispielsweise durch Ausstanzen mindestens einer Durchgangsöffnung, gebildetes Halteelement derart aus der Ebene der ersten Lage heraus zu verformen, dass es einen Haltebereich der zweiten Lage so hintergreift, dass die erste Lage und die zweite Lage durch Formschluss gegen ein Auseinanderbewegen der Lagen gesichert sind. Dabei wird das Halteelement bei seiner Verformung an dem Haltebereich vorbeibewegt, wobei sich das Halteelement und der Haltebereich bereits vor dem Vorbeibewegen des Halteelements an dem Haltebereich teilweise überlappt haben. Dies bietet den Vorteil, dass das Halteelement bereits vor dem Vorbeibewegen an dem Haltebereich die Hinterschneidungen aufweist, die nach dem Vorbeibewegen an dem Haltebereich ein Zurückbewegen des Halteelements und damit ein Lösen der Lagen voneinander verhindern, und dass diese Hinterschneidungen nicht nach dem Vorbeibewegen an dem Haltebereich erst gebildet werden müssen.

Nach dem Vorbeibewegen des Halteelements an dem Haltebereich hindert der Haltebereich das Halteelement an der Rückkehr in die Ebene der ersten Lage, so dass die beiden Lagen in einfacher und zuverlässiger Weise miteinander verbunden sind.

Dabei kann die mehrlagige Dichtung außer der ersten Lage und der zweiten Lage eine beliebige Anzahl weiterer Lagen umfassen, welche vorzugsweise zwischen der ersten Lage und der zweiten Lage angeordnet sind.

Die erfindungsgemäße Lösung bietet den Vorteil, dass kein Schweißvorgang zur Herstellung der Verbindung erforderlich ist, so dass die erfindungsgemäße Verbindungseinrichtung insbesondere auch dann eingesetzt werden kann, wenn eine oder mehrere Lagen der Dichtung ein- oder beidseitig mit einer Beschichtung versehen sind.

Vorzugsweise erfolgt die Verformung des Überlappungsbereichs zumindest teilweise elastisch, so dass sich der Überlappungsbereich, welcher sich beim Vorbeibewegen des Halteelements an dem Haltebereich aus der Ebene der übrigen Teile des Halteelements heraus verformt hat, nach dem Vorbeibewegen an den Haltebereich wieder in die ursprüngliche Stellung relativ zu den übrigen Teilen des Halteelements zurückstellt, so dass der Überlappungsbereich nach dem Vorbeibewegen des Halteelements an dem Haltebereich sich wieder mit dem Haltebereich überlappt, ohne dass der Überlappungsbereich nach dem Vorbeibewegen des Halteelements an dem Haltebereich durch eine externe Kraft verformt werden muss.

Um eine besonders sichere und zuverlässige Verbindung der Lagen der Dichtung miteinander zu erzielen, ist es von Vorteil, dass das Halteelement mindestens zwei voneinander beabstandete Überlappungsbereiche aufweist. Insbesondere kann vorgesehen sein, dass der Überlappungsbereich als ein Vorsprung am Rande des Halteelements ausgebildet ist.

Ergänzend zum Vorhandensein eines Überlappungsbereichs an dem Halteelement kann vorgesehen sein, dass der Haltebereich mindestens einen Überlappungsbereich aufweist, der sich im unverbundenen Zustand der Lagen mit dem Halteelement überlappt und sich beim Vorbeibewegen des Halteelements an dem Haltebereich so verformt, dass das Halteelement an dem Haltebereich vorbeibewegbar ist.

Auch die Verformung des an dem Haltebereich vorgesehenen Überlappungsbereich erfolgt vorzugsweise zumindest teilweise elastisch, so dass sich der Überlappungsbereich nach dem Vorbeibewegen des Halteelements an dem Haltebereich in eine Überlappungsstellung zurückverformt, in welcher der Überlappungsbereich das Halteelement überlappt, so dass die vom Überlappungsbereich überlappten Bereiche des Halteelements den Überlappungsbereich so hintergreifen, dass die erste Lage und die zweite Lage gegen ein Auseinanderbewegen der Lagen gesichert sind.

Um eine besonders sichere und zuverlässige Verbindung der Lagen der Dichtung miteinander zu erzielen, ist es von Vorteil, wenn die zweite Lage mindestens zwei voneinander beabstandete Haltebereiche mit jeweils mindestens einem Überlappungsbereich aufweist.

Insbesondere kann vorgesehen sein, dass der Überlappungsbereich als ein Vorsprung am Rand der Durchgangsöffnung der zweiten Lage ausgebildet ist.

Weist die Verbindungseinrichtung mehrere Überlappungsbereiche auf, an denen sich Bereiche des Halteelements und der zweiten Lage überlappen, so können diese Überlappungsbereiche im Wesentlichen symmetrisch zu einer Längsachse der Verbindungseinrichtung ausgebildet und angeordnet sein.

Alternativ oder ergänzend hierzu kann auch vorgesehen sein, dass die Verbindungseinrichtung mehrere solche Überlappungsbereiche aufweist, welche in Richtung der Längsachse der Verbindungseinrichtung gegeneinander versetzt sind.

Es kann vorgesehen sein, dass sich die Haltelasche zu einer Spitze derselben hin verjüngt. Dies bietet den Vorteil, dass der sich verjüngende Bereich der Haltelasche besonders leicht in die Durchgangsöffnung der zweiten Lage einführbar und durch die letztere hindurch bewegbar ist.

Besonders einfach herstellbar ist ein Halteelement, das einstückig mit der ersten Lage ausgebildet ist.

Besonders einfach herstellbar ist ein Halteelement, welches durch Erzeugen, insbesondere durch Ausstanzen oder Ausschneiden, mindestens einer Durchgangsöffnung in der ersten Lage gebildet ist.

Um die Lagen der Dichtung in parallel zu den Hauptflächen der Dichtungslagen liegenden Richtungen genau zueinander positionieren zu können, ist vorteilharterweise vorgesehen, daß im verbundenen Zustand der Lagen der Rand des Halteelements und der Rand der Durchgangsöffnung der zweiten Lage an der Stelle, an welcher das Halteelement die Durchgangsöffnung durchsetzt, einen Abstand voneinander aufweisen, der kleiner ist als ungefähr 1 Millimeter, vorzugsweise kleiner ist als ungefähr 0,5 Millimeter.

Um die Lagen der Dichtung in zwei verschiedenen, parallel zu den Hauptflächen der Dichtungslagen verlaufenden Richtungen genau relativ zueinander positionieren zu können, ist bei einer bevorzugten Ausgestaltung der Erfindung vorgesehen, daß die Dichtung mindestens zwei Verbindungseinrichtungen umfaßt, daß bei der ersten Verbindungseinrichtung der Rand des Halteelements an der Stelle, an welcher das Halteelement die Durchgangsöffnung der zweiten Lage durchsetzt, längs einer ersten Randrichtung verläuft, daß bei der zweiten Verbindungseinrichtung der Rand des Halteelements an der Stelle, an welcher das Halteelement die Durchgangsöffnung der zweiten Lage durchsetzt, längs einer zweiten Randrichtung verläuft und daß die erste Randrichtung und die zweite Randrichtung gegeneinander verdreht sind.

Besonders günstig ist es, wenn die erste Randrichtung und die zweite Randrichtung um einen Winkel von mindestens ungefähr 45°, vorzugsweise um einen Winkel von mindestens ungefähr 60°, insbesondere um einen Winkel von ungefähr 90°, gegeneinander verdreht sind.

Vorzugsweise ist vorgesehen, daß das Halteelement aus der Ebene der ersten Lage heraus in die Ebene der zweiten Lage hinein verformt ist.

In Bezug auf die Anordnung des Haltebereichs ist es besonders günstig, wenn der Haltebereich der zweiten Lage aus der Ebene der zweiten Lage heraus in die Ebene der ersten Lage oder in die Ebene einer zwischen der ersten Lage und der zweiten Lage angeordneten Lage der Dichtung hinein verformt ist, falls die Dichtung außer der ersten Lage und der zweiten Lage noch mindestens eine weitere Lage umfaßt.

Um zu verhindern, daß die Verformung des Halteelements zu einem Materialauftrag im Bereich der Verbindungseinrichtung führt, ist es von Vorteil, wenn eine Oberfläche des Halteelements im montierten Zustand der Dichtung im wesentlichen bündig mit einer Randfläche der Dichtung, beispielsweise mit einer Unterseite der zweiten Lage der Dichtung, ist.

Um zu verhindern, daß eine Verformung des Haltebereichs zu einem Materialauftrag im Bereich der Verbindungseinrichtung führt, ist es von Vorteil, wenn eine Oberfläche des Haltebereichs im montierten Zustand der Dichtung im wesentlichen bündig mit einer Randfläche der Dichtung, beispielsweise mit einer Oberseite der ersten Lage der Dichtung, ist.

Bei einer bevorzugten Ausgestaltung der Dichtung ist vorgesehen, daß die Verbindungseinrichtung in einem im montierten Zustand der Dichtung gepreßten Bereich der Dichtung angeordnet ist.

Dies ist insbesondere dann möglich, wenn die Verbindungseinrichtung so ausgestaltet ist, daß sie keinen Materialauftrag über die Randflächen der Dichtung hinaus bildet.

Die Anordnung der Verbindungseinrichtung im gepressten Bereich der Dichtung führt dazu, dass auf zusätzliche Laschen an der Außenkontur der Dichtung, welche sonst zur Anordnung der Verbindungseinrichtungen vorgesehen sind, verzichtet werden kann. Dies wiederum führt dazu, dass die Außenkonturen der Dichtung nicht über die abzudichtenden Bauteile überstehen, so dass die aus der Dichtung und aus den abzudichtenden Bauteilen gebildete Bauteilgruppe eine gefälligere Gestalt erhält.

Außerdem entfällt die Gefahr von Verletzungen durch über die abzudichtenden Bauteile überstehende Außenkonturen der Dichtung.

Die vorliegende Erfindung betrifft ferner ein Verfahren zum Verbinden der Lagen einer mehrlagigen Dichtung nach Anspruch 17.

Durch das erfindungsgemäße Verfahren werden die Lagen der mehrlagigen Dichtung in einfacher und zuverlässiger Weise miteinander verbunden, ohne dass hierfür ein Schweißvorgang erforderlich ist und ohne dass ein Materialauftrag im Bereich der zur Verbindung der Lagen geschaffenen Verbindungseinrichtung gebildet werden muss.

Besondere Ausgestaltungen des erfindungsgemäßen Verfahrens sind Gegenstand der abhängigen Ansprüche 18 bis 32, deren Vorteile bereits vorstehend im Zusammenhang mit den besonderen Ausgestaltungen der erfindungsgemäßen Dichtung erläutert worden sind.

Weitere Merkmale und Vorteile der Erfindung sind Gegenstand der nachstehenden Beschreibung und der zeichnerischen Darstellung von Ausführungsbeispielen.

In den Zeichnungen zeigen:
- Fig. 1: eine schematische Draufsicht auf eine mehrlagige Flachdichtung;
- Fig. 2: eine vergrößerte Darstellung des Bereichs I aus Fig. 1;
- Fig. 3: einen schematischen Schnitt längs der Linie 3-3 in Fig. 2;
- Fig. 4: einen schematischen Schnitt längs der Linie 4-4 in Fig. 2;
- Fig. 5: eine schematische Draufsicht auf eine erste Lage der Dichtung aus den Fig. 1 bis 4 mit einem freigestanzten Halteelement;
- Fig. 6: eine Draufsicht auf eine zweite Lage der Dichtung aus den Fig. 1 bis 4 mit einer ausgestanzten Durchgangsöffnung;
- Fig. 7: einen schematischen Schnitt längs der Linie 3-3 in Fig. 2, vor dem Hindurchdrücken des Halteelements durch die Durchgangsöffnung der zweiten Lage;
- Fig. 8: einen schematischen Schnitt längs der Linie 4-4 in Fig. 2, beim Hindurchdrücken des Halteelements durch die Durchgangsöffnung der zweiten Lage;
- Fig. 9: eine schematische Draufsicht auf eine zweite, nicht erfindungsge- mäße, Ausführungsform einer Verbindungseinrichtung;
- Fig. 10: einen schematischen Schnitt längs der Linie 10-10 in Fig. 9;
- Fig. 11: eine schematische Draufsicht auf die erste Lage der Dichtung, mit einem zwischen zwei Durchgangsöffnungen freigestanzten Halte- steg;
- Fig. 12: eine schematische Draufsicht auf eine aus der zweiten Lage ausgestanzte Durchgangsöffnung;
- Fig. 13: eine schematische Draufsicht auf eine dritte, nicht erfindungsge- mäße, Ausführungsform einer Verbindungseinrichtung;
- Fig. 14: einen schematischen Schnitt längs der Linie 14-14 in Fig. 13; und
- Fig. 15: einen der Fig. 14 entsprechenden schematischen Schnitt durch eine dreilagige Dichtung mit einer der dritten Ausführungsform entsprechenden Verbindungseinrichtung.

Gleiche oder funktional äquivalente Elemente sind in allen Figuren mit denselben Bezugszeichen bezeichnet.

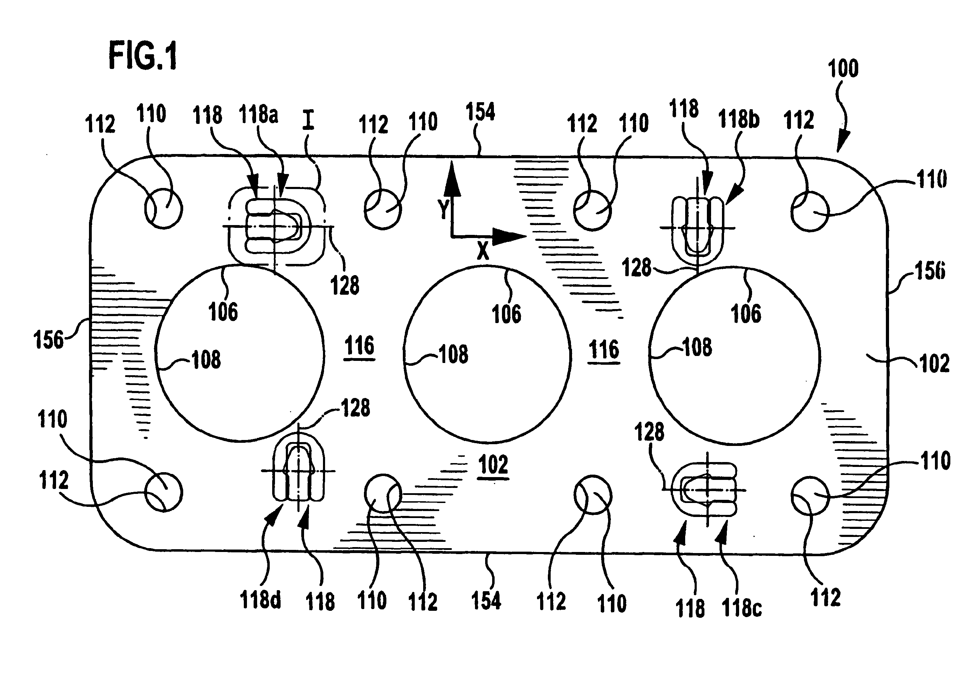

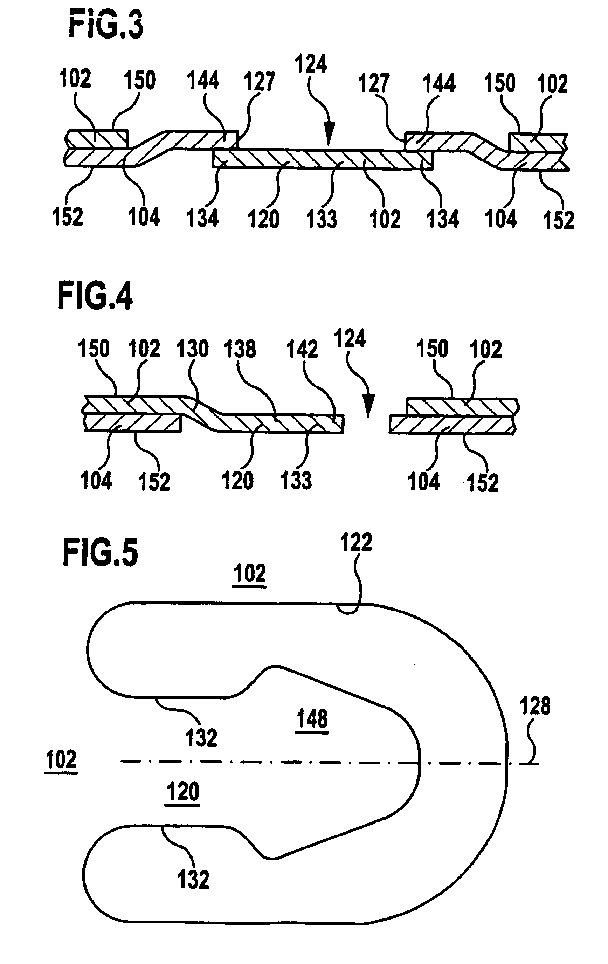

Eine in den Figuren 1 bis 8 dargestellte, als Ganzes mit 100 bezeichnete Flachdichtung umfaßt, wie am besten aus den Figuren 3 und 4 zu ersehen ist, zwei übereinander angeordnete Lagen, nämlich eine erste Lage 102 und eine unter derselben angeordnete, an der ersten Lage 102 flächig anliegende Lage 104.

Die Lagen 102 und 104 umfassen vorzugsweise ein elastisches metallisches Material, insbesondere ein Federstahlblech, und können mit einer Beschichtung, insbesondere mit einer Beschichtung aus einem Elastomer, wie beispielsweise Nitrilbutadienkautschuk (NBR), versehen sein.

Jede der Lagen 102, 104 weist die Form einer im wesentlichen ebenen Platte auf, aus welcher durch Stanzen im folgenden näher beschriebene Durchgangsöffnung ausgebildet sind.

Die Flachdichtung 100 ist dafür vorgesehen, zwischen zwei (nicht dargestellten) abzudichtenden Elementen, beispielsweise einem Motorblock und einem Zylinderkopf, angeordnet zu werden, wobei die Flachdichtung 100 mit Fluid-Durchgangskanälen 106 versehen ist, die aus miteinander fluchtenden Fluidkanal-Durchgangsöffnungen 108 in der ersten Lage 102 und der zweiten Lage 104 gebildet sind, um den Durchtritt eines Fluids durch die Flachdichtung 100 zu ermöglichen (siehe Fig. 1).

Unter einem Fluid ist in dieser Beschreibung und in den beigefügten Ansprüchen ein beliebiges fluides Medium, einschließlich Flüssigkeiten und Gasen, zu verstehen.

Um die Abdichtung der Fluidkanäle 106 zu verbessern, können dieselben von (nicht dargestellten) Sicken ringförmig umgeben sein, welche in der ersten Lage 102 und/oder in der zweiten Lage 104 ausgebildet sind.

Die beiden Bauteile, zwischen welchen die Flachdichtung 100 angeordnet wird, werden durch geeignete Befestigungsmittel, beispielsweise durch Zylinderkopfschrauben und darauf angeordnete Muttern, gegeneinander verspannt, um den für eine ausreichende Dichtigkeit erforderlichen Anpreßdruck zu erzeugen.

Zur Aufnahme dieser Befestigungsmittel sind an der Flachdichtung 100 mehrere, beispielsweise acht, Befestigungsmittelkanäle 110 vorgesehen, welche jeweils aus miteinander fluchtenden Befestigungsmittelkanal-Durchgangsöffnungen 112 in der ersten Lage 102 und der zweiten Lage 104 gebildet sind.

Der zwischen den Befestigungsmittelkanälen 110 liegende Bereich der Flachdichtung 100 bildet einen gepreßten Bereich 116 der Flachdichtung 100.

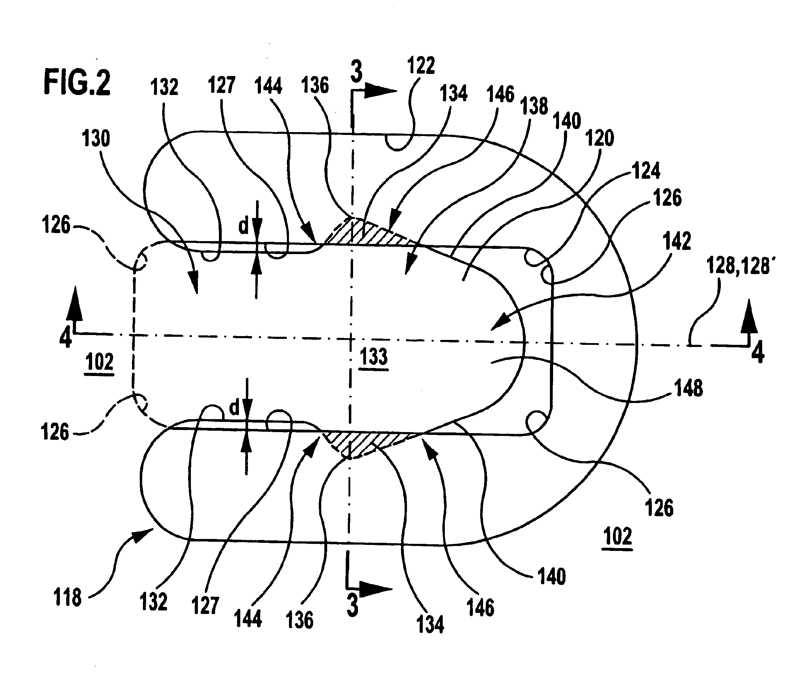

Innerhalb des gepreßten Bereichs 116 sind an der Flachdichtung 100 mehrere, beispielsweise vier, Verbindungseinrichtungen 118 zum Verbinden der beiden Lagen der Flachdichtung 100 miteinander vorgesehen, deren Aufbau nachstehend unter Bezugnahme auf die Figuren 2 bis 4 näher beschrieben werden wird.

Wie am besten aus Fig. 2 zu ersehen ist, umfaßt jede der Verbindungseinrichtungen 118b eine einstückig mit der metallischen Platte der ersten Lage 102 verbundene Haltelasche 120, deren Außenkontur durch Ausstanzen einer im wesentlichen U-förmigen Durchgangsöffnung 122 aus der ersten Lage 102 freigestanzt worden ist.

Die Haltelasche 120 ist im wesentlichen spiegelsymmetrisch zu einer Längsachse 128 ausgebildet, welche zugleich eine Längsachse der Verbindungseinrichtung 118 bildet.

Ferner umfaßt die Verbindungseinrichtung 118 eine aus der zweiten Lage 104 ausgestanzte Durchgangsöffnung 124, welche im wesentlichen rechteckig mit gerundeten Eckbereichen 126 ausgebildet ist.

Die langen Seiten 127 der Durchgangsöffnung 124 in der zweiten Lage 104 verlaufen parallel zu einer Spiegelebene der Durchgangsöffnung 124 und parallel zu einer Längsachse 128' der Durchgangsöffnung 124, welche zu der Längsachse 128 parallel ist.

Die Haltelasche 120 umfaßt einen Verbindungsabschnitt 130, der an der metallischen Platte der ersten Lage 102 festgelegt ist und zwei zueinander und zu der Längsrichtung 128 im wesentlichen parallele Ränder 132 aufweist. Diese Ränder 132 weisen voneinander einen Abstand auf, welcher geringer ist als der gegenseitige Abstand der langen Seiten 127 der Durchgangsöffnung 124 in der zweiten Lage 104.

Am (in Fig. 2 rechten) Ende des Verbindungsabschnitts 130 steht von jedem Rand 132 des Verbindungsabschnitts 130 aus jeweils ein (in Fig. 2 durch Schraffur gekennzeichneter) Überlappungsbereich 134 seitlich über den jeweiligen Rand 132 vor.

Der zwischen den Überlappungsbereichen 136 liegende Teil der Haltelasche wird im folgenden als zentraler Abschnitt 133 der Haltelasche 120 bezeichnet.

Die Scheitelpunkte 136, an denen die Überlappungsbereiche 134 den größten Abstand von der Längsachse 128 der Haltelasche 120 erreichen, haben einen Abstand voneinander, welcher den Abstand der langen Seiten 127 der Durchgangsöffnung 124 in der zweiten Lage 104 übertrifft.

Von den Scheitelpunkten 136 der Überlappungsbereiche 134 aus laufen die beiden Ränder 140 der Haltelasche 120 - symmetrisch zu der Längsachse 128 - aufeinander zu, so daß ein Verjüngungsbereich 138 gebildet wird, in welchem sich die Haltelasche 120 verjüngt.

Das dem Verbindungsabschnitt 130 abgewandte Ende der Haltelasche 120 wird durch einen gerundeten Endabschnitt 142 gebildet, dessen gebogener Rand die beiden konvergierenden Ränder 140 des Verjüngungsabschnitts 138 miteinander verbindet.

Der Verbindungsabschnitt 130 der Haltelasche 120 durchgreift die Durchgangsöffnung 124 der zweiten Lage 104, so daß die Überlappungsbereiche 134, der Verjüngungsabschnitt 138 und der Endabschnitt 142 der Haltelasche 120 aus der Ebene der ersten Lage 102 heraus in die Ebene der zweiten Lage 104 hinein gebogen sind (siehe Figuren 3 und 4), und zwar so, daß die Überlappungsbereiche 134 der Haltelasche 120 jeweils einen seitlichen Randbereich 144 der Durchgangsöffnung 124 der zweiten Lage 104 hintergreifen.

Unter einem "Randbereich" einer Durchgangsöffnung wird dabei im Rahmen dieser Beschreibung und der Ansprüche ein neben dem Rand der betreffenden Durchgangsöffnung liegender Bereich der Lage, in welcher die Durchgangsöffnung ausgebildet ist, verstanden.

Dadurch, daß die seitlichen Überlappungsbereiche 134 der Haltelasche 120 die seitlichen Randbereiche 144 der Durchgangsöffnung 124 der zweiten Lage 104 hintergreifen, sind die erste Lage 102 und die zweite Lage 104 durch Formschluß gegen ein Auseinanderbewegen dieser Lagen in einer Richtung senkrecht zu den Hauptflächen der Lagen gesichert.

Die seitlichen Randbereiche 144 bilden somit Haltebereiche 146 der zweiten Lage 104, welche die Haltelasche 120 in ihrer in die Ebene der zweiten Lage 104 hinein gebogenen Stellung halten.

Die Haltelasche 120 bildet ein Halteelement 148 der ersten Lage 102, welches die Haltebereiche 146 der zweiten Lage 104 hintergreift.

Wie aus den Figuren 3 und 4 zu ersehen ist, sind die seitlichen Randbereiche 144 der Durchgangsöffnung 124 aus der Ebene der zweiten Lage 104 heraus in die Ebene der ersten Lage 102 der Flachdichtung 100 hinein gebogen.

Die Oberseiten dieser seitlichen Randbereiche 144 sind im wesentlichen bündig mit der Oberseite 150 der ersten Lage 102 außerhalb der Verbindungseinrichtung 118.

Die Unterseite des zentralen Abschnitts 133, des Verjüngungsabschnitts 138 und des Endabschnitts 142 der Haltelasche 120 sind im wesentlichen bündig mit der Unterseite 152 der zweiten Lage 104 außerhalb der Verbindungseinrichtung 118.

Dadurch, daß die Randflächen der Verbindungseinrichtung 118 mit den Randflächen der Lagen 102 und 104 (das heißt mit deren Oberseite 150 beziehungsweise deren Unterseite 152 außerhalb der Verbindungseinrichtung 118) der Flachdichtung 100 im wesentlichen bündig sind, bildet die Verbindungseinrichtung 118 keinen Materialauftrag, so daß diese Verbindungseinrichtung 118 ohne weiteres innerhalb des gepreßten Bereichs 116 der Flachdichtung 100 angeordnet werden kann.

An der Stelle, an welcher die Haltelasche 120 die Durchgangsöffnung 124 der zweiten Lage 104 durchsetzt und sich somit jeweils ein Rand 132 des Verbindungsabschnitts 130 der Haltelasche 120 einerseits und eine lange Seite 127 der Durchgangsöffnung 124 auf gleicher Höhe gegenüberstehen, sind der Rand 132 der Haltelasche 120 und der Rand der Durchgangsöffnung 124 in einer zur Längsachse 128 der Verbindungseinrichtung 118 senkrechten Richtung um den Abstand d voneinander beabstandet (siehe Fig. 2). Die beiden Lagen 102 und 104 können also in der zur Längsachse 128 senkrechten Richtung höchstens um den Betrag +/-d gegeneinander verschoben werden.

Wie aus Fig. 1 zu ersehen ist, ist die Längsachse 128 der (in der Darstellung der Fig. 1) links oben an der Flachdichtung 100 angeordneten Verbindungseinrichtung 118a in positiver x-Richtung , das heißt parallel zu den langen Seiten 154 der Flachdichtung 100, ausgerichtet.

Die Längsachse 128 der an der Flachdichtung 100 rechts oben angeordneten Verbindungseinrichtung 118b ist in negativer y-Richtung, das heißt parallel zu den kurzen Seiten 156 der Flachdichtung 100, ausgerichtet.

Die Längsachse 128 der an der Flachdichtung 100 rechts unten angeordneten Verbindungseinrichtung 118c ist in negativer x-Richtung, das heißt parallel zu den langen Seiten 154 der Flachdichtung 100, ausgerichtet.

Die Längsachse 128 der an der Flachdichtung 100 links unten angeordneten Verbindungseinrichtung 118d ist in positiver y-Richtung, das heißt parallel zu den kurzen Seiten 156 der Flachdichtung 100, ausgerichtet.

Somit begrenzen die Verbindungseinrichtungen 118a und 118c die relative Verschiebbarkeit der beiden Lagen 102 und 104 der Flachdichtung 100 längs der y-Richtung auf +/-d, während die Verbindungseinrichtungen 118b und 118d die relative Verschiebbarkeit der beiden Lagen 102 und 104 der Flachdichtung 100 längs der x-Richtung auf +/-d begrenzen.

Dadurch, daß die Flachdichtung 100 zwei Gruppen von Verbindungseinrichtungen 118 umfaßt, wobei die Längsachsen 128 der ersten Gruppe (Verbindungseinrichtungen 118a, 118c) gegenüber den Längsachsen der zweiten Gruppe (118b, 118d) von Verbindungseinrichtungen um einen Winkel von ungefähr 90° verdreht sind, ist gewährleistet, daß die relative Verschiebbarkeit der beiden Lagen 102 und 104 der Flachdichtung 100 in jeder Richtung begrenzt ist und somit die beiden Lagen 102 und 104 der Flachdichtung 100 innerhalb der durch den Abstand d vorgegebenen Toleranz genau zueinander positioniert sind.

Das Verfahren zur Herstellung der vorstehend beschriebenen Verbindungseinrichtung 118 wird im folgenden unter Bezugnahme auf die Figuren 5 bis 8 erläutert:

Zunächst wird die Durchgangsöffnung 122 in der ersten Lage 102 der Flachdichtung 100 durch Ausstanzen aus dieser Lage erzeugt.

Wie aus Fig. 5 zu ersehen ist, bleibt zwischen den Schenkeln der U-förmigen Durchgangsöffnung 122 die Haltelasche 120 stehen, welche einstückig mit den übrigen Teilen der ersten Lage 102 ausgebildet ist.

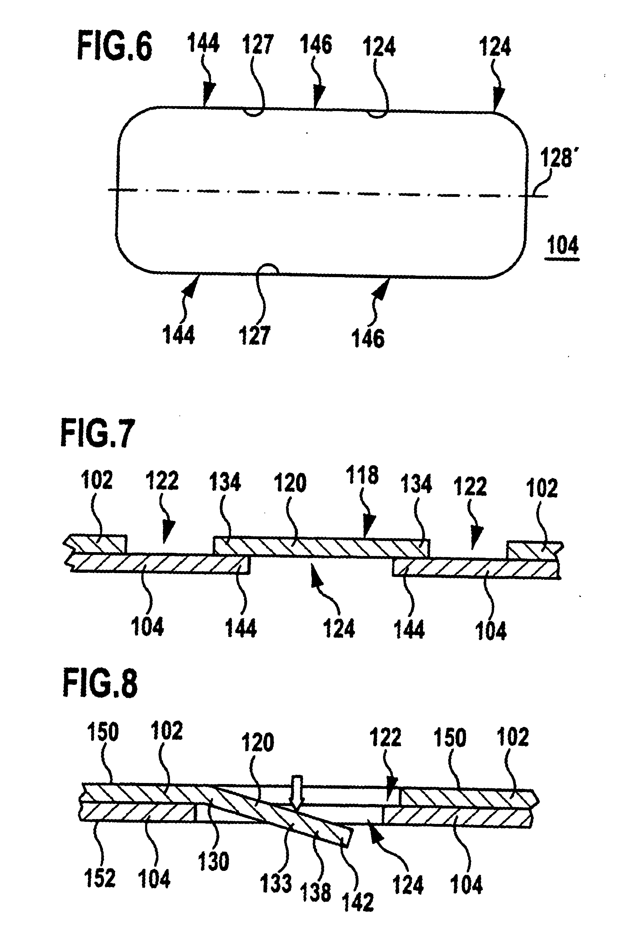

Die Durchgangsöffnung 124 in der zweiten Lage 104 wird durch Ausstanzen aus der zweiten Lage 104 erzeugt (Fig. 6).

Anschließend werden die erste Lage 102 und die zweite Lage 104 so übereinander positioniert, daß die Längsachse 128 der Haltelasche 120 parallel zu der Längsachse 128' der Durchgangsöffnung 124 ausgerichtet ist und genau über derselben positioniert ist und daß die Überlappungsbereiche 134 der Haltelasche 120 über den seitlichen Randbereichen 144 der Durchgangsöffnung 124 angeordnet sind.

In dieser noch unverbundenen Stellung der beiden Lagen 102 und 104, welche in Fig. 7 im Schnitt dargestellt ist, überlappen die Überlappungsbereiche 134 der Haltelasche 120 in der Draufsicht von oben auf die Lagen 102 und 104 die seitlichen Randbereiche 144 der Durchgangsöffnung 124 der zweiten Lage 104.

Anschließend wird die Haltelasche 120 mit den Überlappungsbereichen 134 mittels eines (nicht dargestellten ) Durchdrückstempels durch die Durchgangsöffnung 124 der zweiten Lage 104 hindurch in die in Fig. 8 dargestellte Stellung gedrückt, in welcher der zentrale Abschnitt 133, der Verjüngungsabschnitt 138 und der Endabschnitt 142 der Haltelasche 120 unterhalb der zweiten Lage 104 angeordnet sind.

Bei diesem Durchdrücken werden die Überlappungsbereiche 134 der Haltelasche 120 so weit nach oben abgebogen, daß die Haltelasche 120 durch die (im Bereich der Überlappungsbereiche 134 schmaler als die Haltelasche 120 ausgebildete) Durchgangsöffnung 124 der zweiten Lage 104 hindurch gelangen kann.

Diese Verformung der Überlappungsbereiche 134 beim Durchdrücken der Haltelasche 120 erfolgt zumindest teilweise elastisch, so daß sich die Überlappungsbereiche 134 nach dem Vorbeibewegen an den seitlichen Randbereichen 144 der Durchgangsöffnung 124 zumindest teilweise wieder in ihre ursprüngliche Lage relativ zu dem zentralen Abschnitt 133 der Haltelasche 120 zurückbewegen und somit die seitlichen Randbereiche 144 der Durchgangsöffnung 124 in der Draufsicht auf die Hauptflächen der Dichtungslagen wieder überlappen, nun jedoch von unten.

In einem letzten Verfahrensschritt werden der zentrale Abschnitt 133, die Überlappungsbereiche 134, der Verjüngungsabschnitt 138 und der Endabschnitt 142 der Haltelasche 120 mittels eines (nicht dargestellten) Preßstempels in die Ebene der zweiten Lage 104 hinein gepreßt, wobei die seitlichen Randbereiche 144 der Durchgangsöffnung 124 der zweiten Lage 104 in die Ebene der ersten Lage 102 hinein verformt werden, so daß die in den Figuren 2 bis 4 dargestellte Konfiguration der Verbindungseinrichtung 118 erreicht wird.

Alternativ oder ergänzend zur Verwendung eines Preßstempels kann auch vorgesehen sein, daß das Halteelement 148 zunächst über die Unterseite 152 der zweiten Lage 104 übersteht und erst bei der Montage der Dichtung in die Ebene der zweiten Lage 104 hinein verformt wird.

Damit ist die Herstellung der Verbindungseinrichtung 118 abgeschlossen.

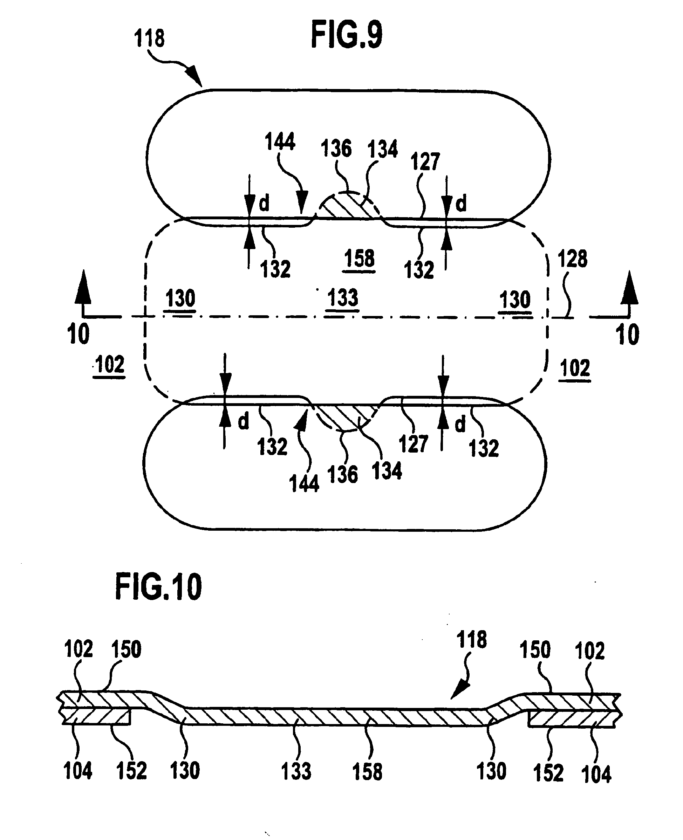

Eine in den Figuren 9 und 10 dargestellte zweite, nicht erfindungsgemäße, Ausführungsform einer Verbindungseinrichtung 118 unterscheidet sich von der vorstehend beschriebenen ersten Ausführungsform dadurch, dass das Halteelement 148 nicht als nur einseitig mit der ersten Lage 102 verbundene Haltelasche 120, sondern als zweiseitig mit der ersten Lage 102 verbundener Haltesteg 158 ausgebildet ist.

Der Haltesteg 158 weist weder einen Verjüngungsabschnitt 138 noch einen Endabschnitt 142 auf, sondern zu beiden Seiten des zentralen Abschnitts 138 jeweils einen Verbindungsabschnitt 130 mit jeweils zwei parallel zueinander verlaufenden Rändern 132.

Auf jeder Seite des Haltestegs 158 springt zwischen den Rändern 132 der beiden Verbindungsabschnitte 130 jeweils ein Überlappungsbereich 134, der in Fig. 9 durch Schraffierung gekennzeichnet ist, seitlich vor.

Der Abstand der beiden Scheitelpunkte 136 der Überlappungsbereiche 134 übersteigt den Abstand der beiden langen Seiten 127 der Durchgangsöffnung 124 der zweiten Lage 104.

Die Überlappungsbereiche 134 hintergreifen die seitlichen Randbereiche 144 der Durchgangsöffnung 124 der zweiten Lage 104, so dass die erste Lage 102 und die zweite Lage 104 durch Formschluss gegen eine Auseinanderbewegung dieser Lagen senkrecht zu deren Hauptflächen gesichert sind.

An den Stellen, an denen sich jeweils ein Rand 132 eines Verbindungsabschnitts 130 und eine der langen Seiten 127 der Durchgangsöffnung 124 gegenüberstehen, beträgt der gegenseitige Abstand des Haltestegs 158 einerseits und der seitlichen Randbereiche 144 der Durchgangsöffnung 124 andererseits d, so daß die relative Bewegbarkeit der beiden Lagen 102 und 104 senkrecht zur Längsachse 128 der Verbindungseinrichtung 118 und des Haltestegs 158 auf +/-d eingeschränkt ist.

Die Unterseite des zentralen Abschnitts 133 des Haltestegs 158 ist im wesentlichen bündig mit der Unterseite 152 der zweiten Lage 104 außerhalb der Verbindungseinrichtung 118, und die Oberseiten der seitlichen Randbereiche 144 der Durchgangsöffnung 124 sind im wesentlichen bündig mit der Oberseite 150 der ersten Lage 102 außerhalb der Verbindungseinrichtung 118, so daß die Randflächen der Verbindungseinrichtung 118 mit den Randflächen der Lagen 102 und 104 der Flachdichtung im wesentlichen bündig sind und die Verbindungseinrichtung 118 keinen Materialauftrag bildet, weshalb die Verbindungseinrichtung 118 ohne weiteres innerhalb des gepreßten Bereiches 116 der Flachdichtung 100 angeordnet werden kann.

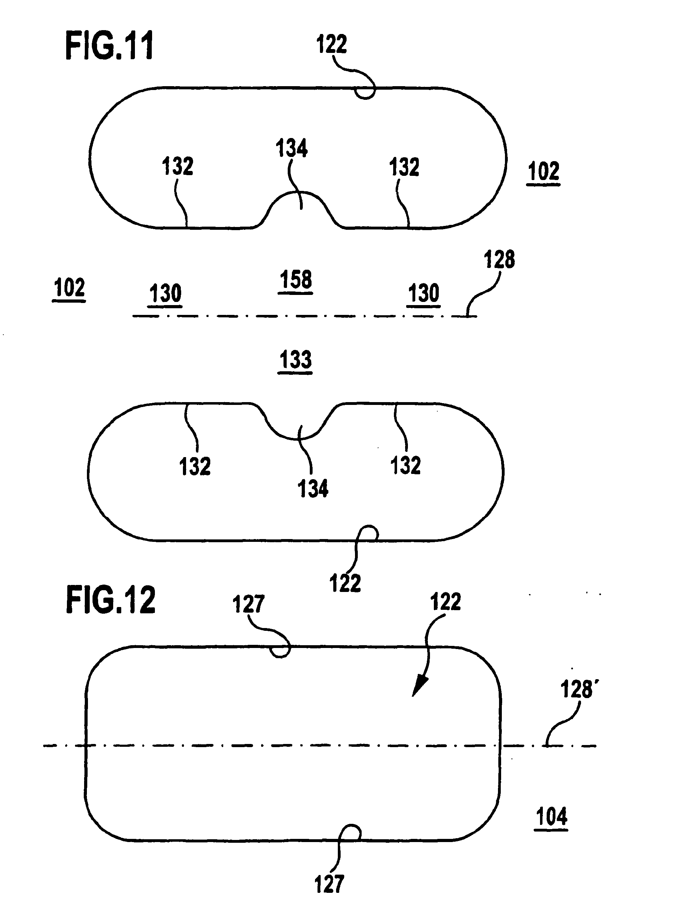

Das Verfahren zur Herstellung der zweiten Ausführungsform einer Verbindungseinrichtung verläuft analog zu dem Verfahren zur Herstellung der ersten Ausführungsform und wird im folgenden unter Bezugnahme auf die Figuren 11 und 12 erläutert:

Zunächst werden in der ersten Lage 102 zwei symmetrisch zu der Längsachse 128 des Haltestegs 158 ausgebildete und angeordnete, im wesentlichen ovale Durchgangsöffnungen 122 durch Ausstanzen aus der ersten Lage 102 erzeugt, zwischen denen der Haltesteg 158 verbleibt.

Die Durchgangsöffnung 124 in der zweiten Lage 104, welche senkrecht zu ihrer Längsachse 128' eine größere Ausdehnung aufweist als die Verbindungsabschnitte 130 des Haltestegs 158, wird durch Ausstanzen aus der zweiten Lage 104 erzeugt.

Anschließend werden die erste Lage 102 und die zweite Lage 104 so übereinander positioniert, daß die Längsachse 128 des Haltestegs 158 parallel zur Längsachse 128' der Durchgangsöffnung 124 der zweiten Lage 104 ausgerichtet und genau über derselben positioniert ist und daß die Überlappungsbereiche 134 des Haltestegs 158 über den seitlichen Randbereichen 144 der Durchgangsöffnung 124 angeordnet sind.

Anschließend wird der Haltesteg 158 mittels eines (nicht dargestellten) Durchdrückstempels durch die Durchgangsöffnung 124 der zweiten Lage 104 hindurch gedrückt, wobei sich die Überlappungsbereiche 134 zumindest teilweise elastisch nach oben verformen, um ein Vorbeibewegen des Haltestegs 158 an den Randbereichen 144 der Durchgangsöffnung 124 zu ermöglichen.

Nach dem Passieren der Durchgangsöffnung 124 stellen sich die Überlappungsbereiche 134 zumindest teilweise in ihre ursprüngliche Position relativ zum zentralen Abschnitt 133 des Haltestegs 158 zurück, so daß die Überlappungsbereiche 134 nunmehr die seitlichen Randbereiche 144 der Durchgangsöffnung 124 von unten hintergreifen und somit ein Zurückbewegen des Haltestegs 158 durch die Durchgangsöffnung 124 verhindern, so daß die beiden Lagen 102 und 104 der Flachdichtung 100 durch Formschluß gegen ein Auseinanderbewegen senkrecht zu den Hauptflächen der Dichtungslagen gesichert sind.

Anschließend wird der Haltesteg 158 mittels eines (nicht dargestellten) Pressstempels in die Ebene der zweiten Lage 104 hineingedrückt, wobei sich zugleich die zweite Lage 104 so verformt, dass die seitlichen Randbereiche 144 der Durchgangsöffnung 124 in die Ebene der ersten Lage 102 hineinverformt werden.

Alternativ oder ergänzend hierzu kann die Verformung des Haltestegs 158 in die Ebene der zweiten Lage 104 hinein auch erst bei der Montage der Dichtung durch das Verspannen der Bauteile, zwischen denen die Dichtung angeordnet ist, gegeneinander erfolgen.

Damit ist die Herstellung der zweiten Ausführungsform einer Verbindungseinrichtung 118 abgeschlossen.

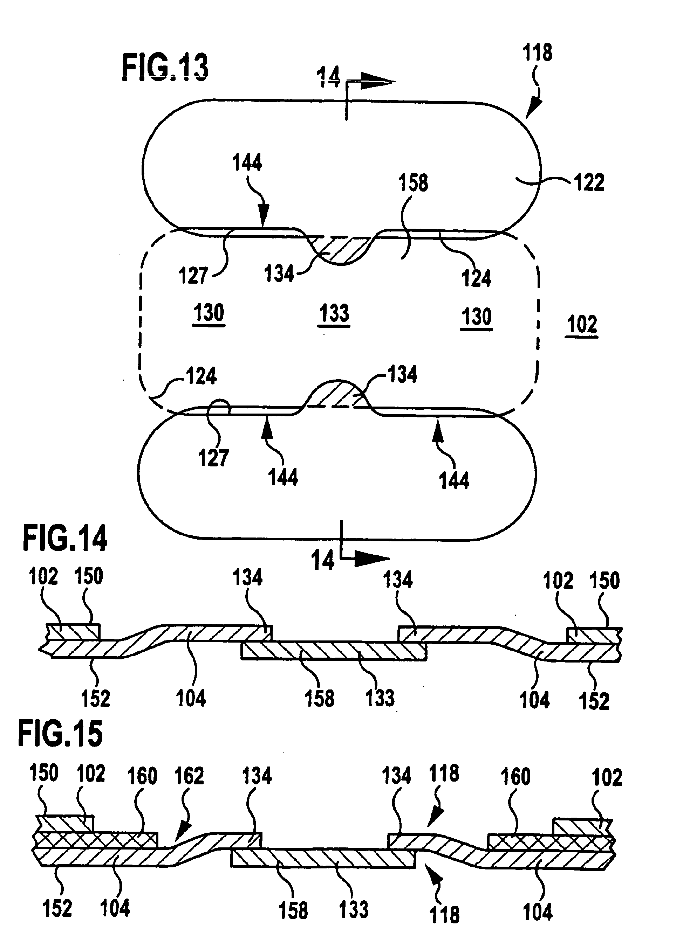

Eine dritte, nicht erfindungsgemäße, Ausführungsform einer Verbindungseinrichtung 118 unterscheidet sich von der vorstehend beschriebenen zweiten Ausführungsform dadurch, dass die Überlappungsbereiche 134 nicht an dem Haltesteg 158, sondern statt dessen an der zweiten Lage 104 angeordnet sind und von den langen Seiten 127 der Durchgangsöffnung 124 aus vorspringen (siehe Fig. 13).

Der Haltesteg 158 weist bei dieser Ausführungsform eine in den Verbindungsabschnitten 130 und dem zentralen Abschnitt 133 jeweils im Wesentlichen konstante Breite auf.

Zur Herstellung dieser Verbindungseinrichtung 118 werden die erste Lage 102 und die zweite Lage 104 so übereinander positioniert, dass die Längsachse 128 des Haltestegs 158 parallel zu der Längsachse 128' der Durchgangsöffnung 124 ausgerichtet und genau über derselben positioniert ist und daß die Überlappungsbereiche 134 der zweiten Lage 104 die Randbereiche des zentralen Abschnitts 133 des Haltestegs 158 von unten überlappen.

Anschließend wird der Haltesteg 158 mittels eines (nicht dargestellten) Durchdrückstempels durch die Durchgangsöffnung 124 der zweiten Lage 104 hindurchgedrückt, wobei sich die Überlappungsbereiche 134 der zweiten Lage 104 zumindest teilweise elastisch so nach unten verformen, daß der Haltesteg 158 zwischen den Überlappungsbereichen 134 passieren kann.

Nach dem Vorbeibewegen des Haltestegs 158 stellen sich die Überlappungsbereiche 134 zumindest teilweise zurück, so daß sie die Randbereiche des zentralen Abschnitts 133 des Haltestegs 158 wiederum überlappen, und zwar von oben.

In einem letzten Verfahrensschritt wird der Haltesteg 158 mittels eines (nicht dargestellten) Preßstempels in die Ebene der zweiten Lage 104 hinein gepreßt, wobei die Überlappungsbereiche 134 der zweiten Lage 104 in die Ebene der ersten Lage 102 hinein verformt werden, so daß die in den Figuren 13 und 14 dargestellte Konfiguration der Verbindungseinrichtung 118 erreicht wird.

Damit ist die Herstellung der Verbindungseinrichtung 118 abgeschlossen.

Bei dieser Ausführungsform ist die Oberseite der Überlappungsbereiche 134 der zweiten Lage 104 im wesentlichen bündig mit der Oberseite 150 der ersten Lage 102 außerhalb der Verbindungseinrichtung 118 und die Unterseite des Haltestegs 158 im wesentlichen bündig mit der Unterseite 152 der zweiten Lage 104 außerhalb der Verbindungseinrichtung 118, so daß die Randflächen der Verbindungseinrichtung 118 mit den Randflächen der Lagen 102 und 104 der Flachdichtung 100 im Wesentlichen bündig sind und die Verbindungseinrichtung 118 keinen Materialauftrag bildet, weshalb die Verbindungseinrichtung 118 ohne weiteres innerhalb des gepressten Bereiches 116 der Flachdichtung 100 angeordnet werden kann.

Eine in Fig. 15 dargestellte vierte, nicht erfindungsgemäße, Ausführungsform einer Verbindungseinrichtung 118 unterscheidet sich von der vorstehend beschriebenen dritten Ausführungsform dadurch, dass zwischen der ersten Lage 102 und der zweiten Lage 104 noch eine weitere Lage 160 der Flachdichtung 100 vorgesehen ist, welche zwischen der ersten Lage 102 und der zweiten Lage 104 angeordnet ist und eine Durchgangsöffnung 162 aufweist, welche eine größere Breite aufweist als die Durchgangsöffnung 124 der zweiten Lage 104, so dass der Haltesteg 158 der ersten Lage 102 beim Herstellen der Verbindungseinrichtung 118 ohne Widerstand durch die Durchgangsöffnung 162 der weiteren Lage 160 hindurchbewegt werden kann.

Bei der vierten Ausführungsform einer Verbindungseinrichtung 118 ist die Oberseite der Überlappungsbereiche 134 der zweiten Lage 104 nicht bündig mit der Oberseite der ersten Lage 150, sondern tiefer als die Oberseite 150 der ersten Lage 102 angeordnet. Gleichwohl bildet die Verbindungseinrichtung 118 keinen Materialauftrag, so dass die Verbindungseinrichtung 118 ohne weiteres im gepressten Bereich 116 der Flachdichtung 100 angeordnet sein kann.

Im übrigen stimmt die vierte Ausführungsform einer Verbindungseinrichtung 118 hinsichtlich Aufbau und Funktion mit der dritten Ausführungsform überein, auf deren vorstehende Beschreibung insoweit Bezug genommen wird.

## Patentansprüche

1. Mehrlagige Dichtung, umfassend mindestens eine erste Lage (102) und eine zweite Lage (104) und mindestens eine Verbindungseinrichtung (118) zum Verbinden der Lagen der Dichtung (100) miteinander,
wobei die Verbindungseinrichtung (118) mindestens ein mit der ersten Lage (102) verbundenes Halteelement (148) und mindestens eine in der zweiten Lage (104) angeordnete Durchgangsöffnung (124) umfasst, wobei das Halteelement zum Verbinden der Lagen aus einer Ebene der ersten Lage (102) heraus verformbar und an einem Haltebereich (146) der zweiten Lage (104) vorbeibewegbar ist und in einem verbundenen Zustand der Lagen den Haltebereich (146) der zweiten Lage (104) so hintergreift, dass die erste Lage (102) und die zweite Lage (104) gegen ein Auseinanderbewegen der Lagen gesichert sind, und
wobei das Halteelement (148) mindestens zwei voneinander beabstandete Überlappungsbereiche (134) aufweist, die sich im unverbundenen Zustand der Lagen mit dem Haltebereich (146) überlappen und sich beim Vorbeibewegen des Halteelements (148) an dem Haltebereich (146) so verformen, dass das Halteelement (148) an dem Haltebereich (146) vorbeibewegbar ist,
**dadurch gekennzeichnet, dass**
das Halteelement (148) als eine nur einseitig mit der ersten Lage (102) verbundene Haltelasche (120) ausgebildet ist.

2. Dichtung nach Anspruch 1, **dadurch gekennzeichnet, dass** der Überlappungsbereich (134) als ein Vorsprung am Rande des Halteelements (148) ausgebildet ist.

3. Dichtung nach einem der Ansprüche 1 oder 2, **dadurch gekennzeichnet, dass** der Haltebereich (146) mindestens einen Überlappungsbereich (134) aufweist, der sich im unverbundenen Zustand der Lagen mit dem Halteelement (148) überlappt und sich beim Vorbeibewegen des Halteelements (148) an dem Haltebereich (146) so verformt, dass das Halteelement (148) an dem Haltebereich (146) vorbeibewegbar ist.

4. Dichtung nach Anspruch 3, **dadurch gekennzeichnet, dass** die zweite Lage (104) mindestens zwei voneinander beabstandete Haltebereiche (146) mit jeweils mindestens einem Überlappungsbereich (134) aufweist.

5. Dichtung nach einem der Ansprüche 3 oder 4, **dadurch gekennzeichnet, dass** der Überlappungsbereich (134) als ein Vorsprung am Rand der Durchgangsöffnung (124) der zweiten Lage (104) ausgebildet ist.

6. Dichtung nach einem der Ansprüche 1 bis 5, **dadurch gekennzeichnet, dass** sich die Haltelasche (120) zu einer Spitze derselben hin verjüngt.

7. Dichtung nach einem der Ansprüche 1 bis 6, **dadurch gekennzeichnet, dass** das Halteelement (148) einstückig mit der ersten Lage (102) ausgebildet ist.

8. Dichtung nach Anspruch 7, **dadurch gekennzeichnet, dass** das Halteelement (148) durch Erzeugen, insbesondere durch Ausstanzen oder Ausschneiden, mindestens einer Durchgangsöffnung (122) in der ersten Lage (102) gebildet ist.

9. Dichtung nach einem der Ansprüche 1 bis 8, **dadurch gekennzeichnet, dass** der Rand (132) des Halteelements (148) und der Rand (127) der Durchgangsöffnung (124) der zweiten Lage (104) an der Stelle, an welcher das Halteelement (148) die Durchgangsöffnung (124) durchsetzt, einen Abstand (d) voneinander aufweisen, der kleiner ist als ungefähr 1 Millimeter, vorzugsweise kleiner ist als ungefähr 0,5 Millimeter.

10. Dichtung nach einem der Ansprüche 1 bis 9, **dadurch gekennzeichnet, dass** die Dichtung (100) mindestens zwei Verbindungseinrichtungen (118) umfasst, dass bei der ersten Verbindungseinrichtung (118a, 118c) der Rand (132) des Halteelements (148) an der Stelle, an welcher das Halteelement (148) die Durchgangsöffnung (124) der zweiten Lage (104) durchsetzt, längs einer ersten Randrichtung (x) verläuft, dass bei der zweiten Verbindungseinrichtung (118b, 118d) der Rand (132) des Halteelements (148) an der Stelle, an welcher das Halteelement (148) die Durchgangsöffnung (124) der zweiten Lage (104) durchsetzt, längs einer zweiten Randrichtung (y) verläuft und dass die erste Randrichtung (x) und die zweite Randrichtung (y) gegeneinander verdreht sind.

11. Dichtung nach Anspruch 10, **dadurch gekennzeichnet, dass** die erste Randrichtung (x) und die zweite Randrichtung (y) um einen Winkel von mindestens ungefähr 45°, vorzugsweise um einen Winkel von mindestens 60°, insbesondere um einen Winkel von ungefähr 90°, gegeneinander verdreht sind.

12. Dichtung nach einem der Ansprüche 1 bis 11, **dadurch gekennzeichnet, dass** das Halteelement (148) in die Ebene der zweiten Lage (104) hinein verformt ist.

13. Dichtung nach einem der Ansprüche 1 bis 12, **dadurch gekennzeichnet, dass** der Haltebereich (146) aus der Ebene der zweiten Lage (104) heraus in die Ebene der ersten Lage (102) oder in die Ebene einer zwischen der ersten Lage (102) und der zweiten Lage (104) angeordneten Lage (160) der Dichtung (100) hinein verformt ist.

14. Dichtung nach einem der Ansprüche 1 bis 13, **dadurch gekennzeichnet, dass** eine Oberfläche des Halteelements (148) im montierten Zustand der Dichtung (100) im Wesentlichen bündig mit einer Randfläche (152) der Dichtung (100) ist.

15. Dichtung nach einem der Ansprüche 1 bis 14, **dadurch gekennzeichnet, dass** eine Oberfläche des Haltebereichs (146) im montierten Zustand der Dichtung (100) im Wesentlichen bündig mit einer Randfläche (150) der Dichtung (100) ist.

16. Dichtung nach einem der Ansprüche 1 bis 15, **dadurch gekennzeichnet, dass** die Verbindungseinrichtung (118) in einem im montierten Zustand der Dichtung (100) gepressten Bereich (116) der Dichtung angeordnet ist.

17. Verfahren zum Verbinden der Lagen einer mehrlagigen Dichtung (100), die mindestens eine erste Lage (102) und eine zweite Lage (104) umfasst, miteinander, umfassend die folgenden Verfahrensschritte:
- mindestens ein mit der ersten Lage (102) verbundenes Halteelement (148), das als eine nur einseitig mit der ersten Lage (102) verbundene Haltelasche (120) ausgebildet wird, und mindestens eine Durchgangsöffnung (124) in der zweiten Lage (104) werden gebildet; und
- das Halteelement (148) wird derart aus der Ebene der ersten Lage (102),heraus verformt, dass es an einem Haltebereich (146) der zweiten Lage (104) vorbeibewegt wird und nach dem Vorbeibewegen den Haltebereich (146) so hintergreift, dass die erste Lage (102) und die zweite Lage (104) gegen ein Auseinanderbewegen der Lagen gesichert sind;
wobei das Halteelement (148) mit mindestens zwei voneinander beabstandeten Überlappungsbereichen (134) ausgebildet wird, die sich vor dem Vorbeibewegen des Halteelements (148) an dem Haltebereich (146) mit dem Haltebereich (146) überlappen und sich beim Vorbeibewegen des Halteelements (148) an dem Haltebereich (146) so verformen, dass das Vorbeibewegen des Halteelements (148) an dem Haltebereich (146) ermöglicht wird.

18. Verfahren nach Anspruch 17, **dadurch gekennzeichnet, dass** der Überlappungsbereich (134) als ein Vorsprung am Rand des Halteelements (148) ausgebildet wird.

19. Verfahren nach einem der Ansprüche 17 oder 18, **dadurch gekennzeichnet, dass** der Haltebereich (146) mit mindestens einem Überlappungsbereich (134) ausgebildet wird, der sich vor dem Vorbeibewegen des Halteelements (148) an dem Haltebereich (146) mit dem Halteelement (148) überlappt und sich beim Vorbeibewegen des Halteelements (148) an dem Haltebereich (146) so verformt, dass das Vorbeibewegen des Halteelements (148) an dem Haltebereich (146) ermöglicht wird.

20. Verfahren nach Anspruch 19, **dadurch gekennzeichnet, dass** an der zweiten Lage (104) mindestens zwei voneinander beabstandete Haltebereiche (146) mit jeweils mindestens einem Überlappungsbereich (134) ausgebildet werden.

21. Verfahren nach einem der Ansprüche 19 oder 20, **dadurch gekennzeichnet, dass** der Überlappungsbereich (134) als ein Vorsprung am Rand der Durchgangsöffnung (124) der zweiten Lage (104) ausgebildet wird.

22. Verfahren nach einem der Ansprüche 17 bis 21, **dadurch gekennzeichnet, dass** die Haltelasche (120) so ausgebildet wird, dass sie sich zu einer Spitze derselben hin verjüngt.

23. Verfahren nach einem der Ansprüche 17 bis 22, **dadurch gekennzeichnet, dass** das Halteelement (148) einstückig mit der ersten Lage (102) ausgebildet wird.

24. Verfahren nach Anspruch 23, **dadurch gekennzeichnet, dass** das Halteelement (148) durch Erzeugen, insbesondere durch Ausstanzen oder Ausschneiden, mindestens einer Durchgangsöffnung (122) in der ersten Lage (102) gebildet wird.

25. Verfahren nach einem der Ansprüche 17 bis 24, **dadurch gekennzeichnet, dass** das Halteelement (148) und die Durchgangsöffnung (124) der zweiten Lage (104) so ausgebildet werden, dass der Rand (132) des Halteelements (148) und der Rand (127) der Durchgangsöffnung (124) der zweiten Lage (104) an der Stelle, an welcher das Halteelement (148) die Durchgangsöffnung (124) durchsetzt, einen Abstand (d) voneinander aufweisen, der kleiner ist als ungefähr 1 Millimeter, vorzugsweise kleiner ist als ungefähr 0,5 Millimeter.

26. Verfahren nach einem der Ansprüche 17 bis 25, **dadurch gekennzeichnet, dass** an der Dichtung (100) mindestens zwei Verbindungseinrichtungen (118) ausgebildet werden, wobei die erste Verbindungseinrichtung (118a, 118c) so ausgebildet wird, dass der Rand (132) des Halteelements (148) an der Stelle, an welcher das Halteelement (148) die Durchgangsöffnung (124) der zweiten Lage (104) durchsetzt, längs einer ersten Randrichtung (x) verläuft, dass die zweite Verbindungseinrichtung (118b, 118d) so ausgebildet wird, dass der Rand (132) des Halteelements (148) an der Stelle, an welcher das Halteelement (148) die Durchgangsöffnung (124) der zweiten Lage (104) durchsetzt, längs einer zweiten Randrichtung (y) verläuft und dass die erste Randrichtung (x) und die zweite Randrichtung (y) gegeneinander verdreht sind.

27. Verfahren nach Anspruch 26, **dadurch gekennzeichnet, dass** die erste Randrichtung (x) und die zweite Randrichtung (y) um einen Winkel von mindestens ungefähr 45°, vorzugsweise um einen Winkel von mindestens ungefähr 60°, insbesondere um einen Winkel von ungefähr 90°, gegeneinander verdreht sind.

28. Verfahren nach einem der Ansprüche 17 bis 27, **dadurch gekennzeichnet, dass** das Halteelement (148) in die Ebene der zweiten Lage (104) hinein verformt wird.

29. Verfahren nach einem der Ansprüche 17 bis 28, **dadurch gekennzeichnet, dass** der Haltebereich (146) aus der Ebene der zweiten Lage (104) heraus in die Ebene der ersten Lage (102) oder in die Ebene einer zwischen der ersten Lage (102) und der zweiten Lage (104) angeordneten Lage (160) der Dichtung (100) hinein verformt wird.

30. Verfahren nach einem der Ansprüche 17 bis 29, **dadurch gekennzeichnet, dass** die Verbindungseinrichtung (118) so ausgebildet wird, dass eine Oberfläche des Halteelements (148) im montierten Zustand der Dichtung (100) im wesentlichen bündig mit einer Randfläche (152) der Dichtung (100) ist.

31. Verfahren nach einem der Ansprüche 17 bis 30, **dadurch gekennzeichnet, dass** die Verbindungseinrichtung (118) so ausgebildet wird, dass eine Oberfläche des Haltebereichs (146) im montierten Zustand der Dichtung (100) im wesentlichen bündig mit einer Randfläche (150) der Dichtung (100) ist.

32. Verfahren nach einem der Ansprüche 17 bis 31, **dadurch gekennzeichnet, dass** die Verbindungseinrichtung (118) in einem im montierten Zustand der Dichtung (100) gepressten Bereich (116) der Dichtung ausgebildet wird.

## Claims

1. A multi-layer seal which comprises at least one first layer (102) and one second layer (104) and at least one connecting arrangement (118) for connecting the layers of the seal (100) together, wherein the connecting arrangement (118) comprises at least one retaining element (148) connected to the first layer (102) and at least one through opening (124) arranged in the second layer (104), wherein, for the purposes of connecting the layers, the retaining element is deformable from a plane of the first layer (102) and can be moved past a retention area (146) of the second layer (104), and grips behind the retention area (146) of the second layer (104) in a connected state of the layers in such a manner that the first layer (102) and the second layer (104) are safeguarded from a separating movement of the layers, and
wherein the retaining element (148) comprises at least two mutually spaced overlapping areas (134), which overlap the retention area (146) in the unconnected state of the layers and deform during the movement of the retaining element (148) past the retention area (146) in such a manner that the retaining element (148) can be moved past the retention area (146), **characterised in that**
the retaining element (148) is in the form of a retaining tongue (120) connected at only one end to the first layer (102).

2. A seal in accordance with Claim 1, **characterised in that** the overlapping area (134) is in the form of a projection at the edge of the retaining element (148).

3. A seal in accordance with Claim 1 or 2, **characterised in that** the retention area (146) comprises at least one overlapping area (134) which overlaps the retaining element (148) in the unconnected state of the layers and deforms during the movement of the retaining element (148) past the retention area (146) in such a manner that the retaining element (148) can be moved past the retention area (146).

4. A seal in accordance with Claim 3, **characterised in that** the second layer (104) comprises at least two mutually spaced retention areas (146) each having at least one overlapping area (134).

5. A seal in accordance with Claim 3 or 4, **characterised in that** the overlapping area (134) is in the form of a projection at the edge of the through opening (124) in the second layer (104).

6. A seal in accordance with any of Claims 1 to 5, **characterised in that** the retaining tongue (120) tapers towards a tip thereof.

7. A seal in accordance with any of Claims 1 to 6, **characterised in that** the retaining element (148) is formed in one piece with the first layer (102).

8. A seal in accordance with Claim 7, **characterised in that** the retaining element (148) is formed by producing, especially by a stamping-out or a cutting-out process, at least one through opening (122) in the first layer (102).

9. A seal in accordance with any of Claims 1 to 8, **characterised in that** the edge (132) of the retaining element (148) and the edge (127) of the through opening (124) in the second layer (104) are spaced apart at the point at which the retaining element (148) penetrates the through opening (124) by a spacing (d) which is less than approximately 1 millimetre, and preferably less than approximately 0.5 millimetre.

10. A seal in accordance with any of Claims 1 to 9, **characterised in that** the seal (100) comprises at least two connecting arrangements (118), **in that**, in the case of the first connecting arrangement (118a, 118c), the edge (132) of the retaining element (148) extends in a first edge direction (x) at the point at which the retaining element (148) penetrates the through opening (124) in the second layer (104), **in that**, in the case of the second connecting arrangement (118b, 118d), the edge (132) of the retaining element (148) extends in a second edge direction (y) at the point at which the retaining element (148) penetrates the through opening (124) in the second layer (104), and **in that** the first edge direction (x) and the second edge direction (y) are mutually rotated.

11. A seal in accordance with Claim 10, **characterised in that** the first edge direction (x) and the second edge direction (y) are mutually rotated through an angle of at least approximately 45°, preferably through an angle of at least 60° and especially through an angle of approximately 90°.

12. A seal in accordance with any of Claims 1 to 11, **characterised in that** the retaining element (148) is deformed into the plane of the second layer (104).

13. A seal in accordance with any of Claims 1 to 12, **characterised in that** the retention area (146) is deformed from the plane of the second layer (104) into the plane of the first layer (102) or into the plane of a layer (160) of the seal (100) that is arranged between the first layer (102) and the second layer (104).

14. A seal in accordance with any of Claims 1 to 13, **characterised in that** a surface of the retaining element (148) is substantially flush with an edge surface (152) of the seal (100) in the assembled state of the seal (100).

15. A seal in accordance with any of Claims 1 to 14, **characterised in that** a surface of the retention area (146) is substantially flush with an edge surface (150) of the seal (100) in the assembled state of the seal (100).

16. A seal in accordance with any of Claims 1 to 15, **characterised in that** the connecting arrangement (118) is arranged in a region (116) of the seal which is compressed in the assembled state of the seal (100).

17. A method of connecting together the layers of a multi-layer seal (100), which comprises at least one first layer (102) and one second layer (104), comprising the following method steps:
- there are formed at least one retaining element (148) connected to the first layer (102), the retaining element being formed as a retaining tongue (120) connected at only one end to the first layer (102), and at least one through opening (124) in the second layer (104);
- the retaining element (148) is deformed from the plane of the first layer (102) in such a manner that it is moved past a retention area (146) of the second layer (104) and, after the passing movement, grips behind the retention area (146) in such a manner that the first layer (102) and the second layer (104) are safeguarded from a separating movement of the layers;
wherein the retaining element (148) is formed with at least two mutually spaced overlapping areas (134), which overlap the retention area (146) prior to the movement of the retaining element (148) past the retention area (146) and are deformed during the movement of the retaining element (148) past the retention area (146) in such a manner as to enable the retaining element (148) to be moved past the retention area (146).

18. A method in accordance with Claim 17, **characterised in that** the overlapping area (134) is formed as a projection at the edge of the retaining element (148).

19. A method in accordance with Claim 17 or 18, **characterised in that** the retention area (146) is formed with at least one overlapping area (134) which overlaps the retaining element (148) prior to the movement of the retaining element (148) past the retention area (146) and is deformed during the movement of the retaining element (148) past the retention area (146) in such a manner as to enable the retaining element (148) to be moved past the retention area (146).

20. A method in accordance with Claim 19, **characterised in that** at least two mutually spaced retention areas (146) each having at least one overlapping area (134) are formed on the second layer (104).

21. A method in accordance with Claim 19 or 20, **characterised in that** the overlapping area (134) is formed as a projection at the edge of the through opening (124) in the second layer (104).

22. A method in accordance with any of Claims 17 to 21, **characterised in that** the retaining tongue (120) is formed in such a manner that it tapers towards a tip thereof.

23. A method in accordance with any of Claims 17 to 22, **characterised in that** the retaining element (148) is formed in one piece with the first layer (102).

24. A method in accordance with Claim 23, **characterised in that** the retaining element (148) is formed by producing, especially by means of a stamping-out or cutting-out process, at least one through opening (122) in the first layer (102).

25. A method in accordance with any of Claims 17 to 24, **characterised in that** the retaining element (148) and the through opening (124) in the second layer (104) are formed in such a manner that the edge (132) of the retaining element (148) and the edge (127) of the through opening (124) in the second layer (104) are spaced apart at the point at which the retaining element (148) penetrates the through opening (124) by a spacing (d) which is less than approximately 1 millimetre, and preferably less than approximately 0.5 millimetre.

26. A method in accordance with any of Claims 17 to 25, **characterised in that** at least two connecting arrangements (118) are formed on the seal (100), wherein the first connecting arrangement (118a, 118c) is formed in such a manner that the edge (132) of the retaining element (148) extends in a first edge direction (x) at the point at which the retaining element (148) penetrates the through opening (124) in the second layer (104), **in that** the second connecting arrangement (118b, 118d) is formed in such a manner that the edge (132) of the retaining element (148) extends in a second edge direction (y) at the point at which the retaining element (148) penetrates the through opening (124) in the second layer (104), and **in that** the first edge direction (x) and the second edge direction (y) are mutually rotated.

27. A method in accordance with Claim 26, **characterised in that** the first edge direction (x) and the second edge direction (y) are mutually rotated through an angle of at least approximately 45°, preferably through an angle of at least approximately 60° and especially through an angle of approximately 90°.

28. A method in accordance with any of Claims 17 to 27, **characterised in that** the retaining element (148) is deformed into the plane of the second layer (104).

29. A method in accordance with any of Claims 17 to 28, **characterised in that** the retention area (146) is deformed from the plane of the second layer (104) into the plane of the first layer (102) or into the plane of a layer (160) of the seal (100) that is arranged between the first layer (102) and the second layer (104).

30. A method in accordance with any of Claims 17 to 29, **characterised in that** the connecting arrangement (118) is formed in such a manner that a surface of the retaining element (148) is substantially flush with an edge surface (152) of the seal (100) in the assembled state of the seal (100).

31. A method in accordance with any of Claims 17 to 30, **characterised in that** the connecting arrangement (118) is formed in such a manner that a surface of the retention area (146) is substantially flush with an edge surface (150) of the seal (100) in the assembled state of the seal (100).

32. A method in accordance with any of Claims 17 to 31, **characterised in that** the connecting arrangement (118) is formed in a region (116) of the seal (100) which is compressed in the assembled state of the seal (100).

## Revendications

1. Joint d'étanchéité multicouche, comprenant au moins une première couche (102) et une deuxième couche (104) et au moins un dispositif d'assemblage (118) pour assembler les couches du joint d'étanchéité (100) entre elles, dans lequel le dispositif d'assemblage (118) comprend au moins un élément de retenue (148) relié à la première couche (102) et au moins une ouverture de passage (124) disposée dans la deuxième couche (104), dans lequel l'élément de retenue, pour assembler les couches, peut être déformé hors d'un plan de la première couche (102) et peut être amené à passer devant une zone de retenue (146) de la deuxième couche (104), et dans un état assemblé des couches, passe derrière la zone de retenue (146) de la deuxième couche (104) de telle sorte que la première couche (102) et la deuxième couche (104) sont verrouillées contre un écartement des couches, et
dans lequel l'élément de retenue (148) présente au moins deux zones de chevauchement (134) espacées l'une de l'autre qui, à l'état non assemblé des couches, se chevauchent avec la zone de retenue (146), et lors du passage de l'élément de retenue (148) devant la zone de retenue (146) se déforment de telle sorte que l'élément de retenue (148) peut être amené à passer devant la zone de retenue (146),
**caractérisé en ce que** l'élément de retenue (148) est réalisé comme une patte de retenue (120) reliée à la première couche (102) d'un côté seulement.

2. Joint d'étanchéité selon la revendication 1, **caractérisé en ce que** la zone de chevauchement (134) est réalisée comme une saillie sur le bord de l'élément de retenue (148).

3. Joint d'étanchéité selon l'une quelconque des revendications 1 ou 2, **caractérisé en ce que** la zone de retenue (146) présente au moins une zone de chevauchement (134) qui, à l'état non assemblé des couches, se chevauche avec l'élément de retenue (148), et lors du passage de l'élément de retenue (148) devant la zone de retenue (146), se déforme de telle sorte que l'élément de retenue (148) peut être amené à passer devant la zone de retenue (146).

4. Joint d'étanchéité selon la revendication 3, **caractérisé en ce que** la deuxième couche (104) présente au moins deux zones de retenue (146) espacées l'une de l'autre avec respectivement au moins une zone de chevauchement (134).

5. Joint d'étanchéité selon l'une quelconque des revendications 3 ou 4, **caractérisé en ce que** la zone de chevauchement (134) est réalisée comme une saillie sur le bord de l'ouverture de passage (124) de la deuxième couche (104).

6. Joint d'étanchéité selon l'une quelconque des revendications 1 à 5, **caractérisé en ce que** la patte de retenue (120) s'amincit en direction de sa pointe.

7. Joint d'étanchéité selon l'une quelconque des revendications 1 à 6, **caractérisé en ce que** l'élément de retenue (148) est réalisé de façon solidaire avec la première couche (102).

8. Joint d'étanchéité selon la revendication 7, **caractérisé en ce que** l'élément de retenue (148) est formé par l'aménagement, en particulier par matriçage ou découpe, d'au moins une ouverture de passage (122) dans la première couche (102).

9. Joint d'étanchéité selon l'une quelconque des revendications 1 à 8, **caractérisé en ce que** le bord (132) de l'élément de retenue (148) et le bord (127) de l'ouverture de passage (124) de la deuxième couche (104), à l'endroit où l'élément de retenue (148) traverse l'ouverture de passage (124), présentent un espacement (d) mutuel inférieur à environ 1 millimètre, de préférence inférieur à environ 0,5 millimètre.

10. Joint d'étanchéité selon l'une quelconque des revendications 1 à 9, **caractérisé en ce que** le joint d'étanchéité (100) comprend au moins deux dispositifs d'assemblage (118), **en ce que** sur le premier dispositif d'assemblage (118a, 118c) le bord (132) de l'élément de retenue (148), à l'endroit où l'élément de retenue (148) traverse l'ouverture de passage (124) de la deuxième couche (104), s'étend dans une première direction périphérique (x), **en ce que** sur le deuxième dispositif d'assemblage (118b, 118d), le bord (132) de l'élément de retenue (148), à l'endroit où l'élément de retenue (148) traverse l'ouverture de passage (124) de la deuxième couche (104), s'étend dans une deuxième direction périphérique (y), et **en ce que** la première direction périphérique (x) et la deuxième direction périphérique (y) sont décalées l'une par rapport à l'autre.

11. Joint d'étanchéité selon la revendication 10, **caractérisé en ce que** la première direction périphérique (x) et la deuxième direction périphérique (y) sont décalées l'une par rapport à l'autre d'un angle d'au moins environ 45°, de préférence d'un angle d'au moins 60°, en particulier d'un angle d'environ 90°.

12. Joint d'étanchéité selon l'une quelconque des revendications 1 à 11, **caractérisé en ce que** l'élément de retenue (148) est déformé vers le plan de la deuxième couche (104).

13. Joint d'étanchéité selon l'une quelconque des revendications 1 à 12, **caractérisé en ce que** la zone de retenue (146) est déformée hors du plan de la deuxième couche (104) vers le plan de la première couche (102) ou vers le plan d'une couche (160) du joint d'étanchéité (100), disposée entre la première couche (102) et la deuxième couche (104).

14. Joint d'étanchéité selon l'une quelconque des revendications 1 à 13, **caractérisé en ce qu'**une surface de l'élément de retenue (148), à l'état monté du joint d'étanchéité (100), se trouve substantiellement en affleurement avec une surface périphérique (152) du joint d'étanchéité (100).

15. Joint d'étanchéité selon l'une quelconque des revendications 1 à 14, **caractérisé en ce qu'**une surface de la zone de retenue (146), à l'état monté du joint d'étanchéité (100), se trouve substantiellement en affleurement avec une surface périphérique (150) du joint d'étanchéité (100).

16. Joint d'étanchéité selon l'une quelconque des revendications 1 à 15, **caractérisé en ce que** le dispositif d'assemblage (118) est disposé dans une zone (116) du joint d'étanchéité, comprimée à l'état monté du joint d'étanchéité (100).

17. Procédé pour assembler ensemble les couches d'un joint d'étanchéité multicouche (100) qui comprend au moins une première couche (102) et une deuxième couche (104), comprenant les étapes de procédé suivantes consistant à :
■ former au moins un élément de retenue (148) relié à la première couche (102) et qui est réalisé comme une patte de retenue (120) reliée à la première couche (102) d'un côté seulement, et au moins une ouverture de passage (124) dans la deuxième couche (104) ; et
■ déformer l'élément de retenue (148) hors du plan de la première couche (102) de telle sorte qu'il est amené à passer devant une zone de retenue (146) de la deuxième couche (104) et qu'après le passage il saisit la zone de retenue (146) par l'arrière de telle sorte que la première couche (102) et la deuxième couche (104) sont verrouillées contre un écartement des couches ;
dans lequel l'élément de retenue (148) est réalisé avec au moins deux zones de chevauchement (134) espacées l'une de l'autre, qui, avant le passage de l'élément de retenue (148) devant la zone de retenue (146), se chevauchent avec la zone de retenue (146) et se déforment lors du passage de l'élément de retenue (148) devant la zone de retenue (146) de façon à permettre le passage de l'élément de retenue (148) devant la zone de retenue (146).

18. Procédé selon la revendication 17, **caractérisé en ce que** la zone de chevauchement (134) est réalisée comme une saillie sur le bord de l'élément de retenue (148).

19. Procédé selon l'une quelconque des revendications 17 ou 18, **caractérisé en ce que** la zone de retenue (146) est réalisée avec au moins une zone de chevauchement (134) qui, avant le passage de l'élément de retenue (148) devant la zone de retenue (146), se chevauche avec l'élément de retenue (148) et se déforme lors du passage de l'élément de retenue (148) devant la zone de retenue (146) de façon à permettre le passage de l'élément de retenue (148) devant la zone de retenue (146).

20. Procédé selon la revendication 19, **caractérisé en ce que** sur la deuxième couche (104), au moins deux zones de retenue (146) espacées l'une de l'autre avec respectivement au moins une zone de chevauchement (134) sont réalisées.

21. Procédé selon l'une quelconque des revendications 19 ou 20, **caractérisé en ce que** la zone de chevauchement (134) est réalisée comme une saillie sur le bord de l'ouverture de passage (124) de la deuxième couche (104).

22. Procédé selon l'une quelconque des revendications 17 à 21, **caractérisé en ce que** la patte de retenue (120) est réalisée de telle sorte qu'elle s'amincit en direction de sa pointe.

23. Procédé selon l'une quelconque des revendications 17 à 22, **caractérisé en ce que** l'élément de retenue (148) est réalisé de façon solidaire avec la première couche (102).

24. Procédé selon la revendication 23, **caractérisé en ce que** l'élément de retenue (148) est formé par l'aménagement, en particulier par matriçage ou découpe, d'au moins une ouverture de passage (122) dans la première couche (102).

25. Procédé selon l'une quelconque des revendications 17 à 24, **caractérisé en ce que** l'élément de retenue (148) et l'ouverture de passage (124) de la deuxième couche (104) sont réalisés de telle sorte que le bord (132) de l'élément de retenue (148) et le bord (127) de l'ouverture de passage (124) de la deuxième couche (104), à l'endroit où l'élément de retenue (148) traverse l'ouverture de passage (124), présentent un espacement (d) mutuel qui est inférieur à environ 1 millimètre, de préférence inférieur à environ 0,5 millimètre.

26. Procédé selon l'une quelconque des revendications 17 à 25, **caractérisé en ce que** sur le joint d'étanchéité (100) au moins deux dispositifs d'assemblage (118) sont réalisés, dans lequel le premier dispositif d'assemblage (118a, 118c) est réalisé de telle sorte que le bord (132) de l'élément de retenue (148), à l'endroit où l'élément de retenue (148) traverse l'ouverture de passage (124) de la deuxième couche (104), s'étend dans une première direction périphérique (x), **en ce que** le deuxième dispositif d'assemblage (118b, 118d) est réalisé de telle sorte que le bord (132) de l'élément de retenue (148), à l'endroit où l'élément de retenue (148) traverse l'ouverture de passage (124) de la deuxième couche (104), s'étend dans une deuxième direction périphérique (y), et **en ce que** la première direction périphérique (x) et la deuxième direction périphérique (y) sont décalées l'une par rapport à l'autre.

27. Procédé selon la revendication 26, **caractérisé en ce que** la première direction périphérique (x) et la deuxième direction périphérique (y) sont décalées l'une par rapport à l'autre d'un angle d'au moins environ 45°, de préférence d'un angle d'au moins environ 60°, en particulier d'un angle d'environ 90°.

28. Procédé selon l'une quelconque des revendications 17 à 27, **caractérisé en ce que** l'élément de retenue (148) est déformé vers le plan de la deuxième couche (104).

29. Procédé selon l'une quelconque des revendications 17 à 28, **caractérisé en ce que** la zone de retenue (146) est déformée hors du plan de la deuxième couche (104) vers le plan de la première couche (102) ou vers le plan d'une couche (160) du joint d'étanchéité (100), disposée entre la première couche (102) et la deuxième couche (104).

30. Procédé selon l'une quelconque des revendications 17 à 29, **caractérisé en ce que** le dispositif d'assemblage (118) est réalisé de telle sorte qu'une surface de l'élément de retenue (148), à l'état monté du joint d'étanchéité (100), se trouve substantiellement en affleurement avec une surface périphérique (152) du joint d'étanchéité (100).

31. Procédé selon l'une quelconque des revendications 17 à 30, **caractérisé en ce que** le dispositif d'assemblage (118) est réalisé de telle sorte qu'une surface de la zone de retenue (146), à l'état monté du joint d'étanchéité (100), se trouve substantiellement en affleurement avec une surface périphérique (150) du joint d'étanchéité (100).

32. Procédé selon l'une quelconque des revendications 17 à 31, **caractérisé en ce que** le dispositif d'assemblage (118) est réalisé dans une zone (116) du joint d'étanchéité, comprimée à l'état monté du joint d'étanchéité (100).
